# EUROPEAN PATENT SPECIFICATION

(11) **EP 3 240 398 B1**
(45) Date of publication and mention of the grant of the patent: **05.08.2020**
(21) Application number: 15823535.8
(22) Date of filing: 15.12.2015
(51) Int. Cl.: A01J 5/013, A01J 5/04

(54) **A BOTTOM STRUCTURE FOR A MILK RECEIVER**
BODENSTRUKTUR FÜR EINEN MILCHAUFFANGBEHÄLTER
STRUCTURE DE FOND POUR UN RÉCEPTEUR DE LAIT

(30) Priority: 30.12.2014 SE 1451668
(43) Date of publication of application: 08.11.2017
(73) Proprietor: DeLaval Holding AB, 147 21 Tumba (SE)
(72) Inventor: JOHANSSON, Thomas, 147 21 Tumba (SE)
(74) Representative: Lilliehorn, Tobias
(86) International application number: PCT/SE2015/051342
(87) International publication number: WO 2016/108746

(56) References cited:
- WO-A1-93/25871
- DE-U- 1 904 290

## Description

### THE BACKGROUND OF THE INVENTION AND PRIOR ART

The present invention relates to a bottom structure for a milk receiver to which vacuum from a vacuum supply draws milk from the teats of an animal.

Untreated milk stratifies into layers due to the different density of the substances included in the milk. An upper layer of the untreated milk for example includes a much higher fat content than the lower layers. For this reason, it is known to provide receivers with a motor-driven stirrer or the like which agitates the milk in the milk receiver before a milk sample is taken. It is also known to supply air to the milk receiver in order to agitate the milk and provide a substantially homogenous distribution of the substances in the milk receiver before a milk sample is taken. However, all kinds of mechanical treatment of milk increase the content of free fatty acids (FFA) in the milk. A too high content of free fatty acids gives, for example, the milk a rancid taste.

WO 2013/032397 shows a milking arrangement comprising an end unit provided with a motor-driven rotary agitator which provides a stirring movement of the milk collected in the end unit in order to obtain a homogenous distribution of the included substances in the milk. A sampling device takes milk samples of the mixed milk. The sampling device comprises an inlet line extracting milk from an outlet line of the end unit or directly from the end unit.

WO 93/25871 shows a meter for measuring the quantity of milk. Milk samples are collected in a milk sample reservoir on discharge of weighed discrete quantities of milk from the weighing container. There are agitating means for agitating and mixing the milk samples when they have been collected in the milk sample reservoir.

### SUMMARY OF THE INVENTION

The object of the present invention is to provide a bottom structure for a milk receiver comprising an agitation device able to provide a stirring movement of milk in the milk receiver such that the included substances obtain a homogenous distribution in the milk without the risk that the free fatty acid content in the milk increases significantly.

This object is achieved by the bottom structure initially defined, which is characterized in that it comprises an agitation device for stirring of milk in the milk receiver, wherein the agitation device comprises an agitation member mounted to the bottom structure in such a way that when the bottom structure is mounted to the milk receiver, the agitation member will be arranged on the inside of the milk receiver, an actuator mounted to the bottom structure in such a way that when the bottom structure is mounted to the milk receiver, the actuator will be arranged outside of the milk receiver, and a movement transmission mechanism configured to transfer movements from the actuator to the agitation member in such a way that the actuator and the movement transmission mechanism together provide a reciprocating swinging movement of the agitation member in the milk receiver. Consequently, the agitation member swings to and fro on the inside of the milk receiver in contact with the milk. In case the agitation member swings at a moderate frequency, it provides a very gentle stirring movement of the milk in the milk receiver without the risk that the free fatty acid content in the milk increases significantly. Such a stirring movement of the milk is usually enough in order to achieve a homogenous distribution of the included substances in the milk before a milk sample is taken of the milk in the milk receiver.

Wherein the agitation member is plate-shaped and comprises a first side configured to act with a first pressure force on the milk when it performs a swinging movement in a first direction and a second side configured to act with a second pressure force on the milk when it performs a swinging movement in a second opposite direction, wherein the first pressure force differs from the second pressure force. The shape of the agitation member is in this case designed to cause a difference between the pressure forces on the first side and the second side. A main part of the first side and the second side may e.g. have a surface forming a substantially rectilinear angle in relation to the movement direction of the agitation member. The first side provides a pushing movement of the milk located in front of it when the agitation member swings in the first direction. During this movement, a negative pressure arises in the milk on the second side of the agitation member also resulting in a mixing movement of the milk. In a corresponding manner, the second side provides a pushing movement of the milk in front of it when the agitation member swings in the second direction. During this movement, a negative pressure arises in the milk on the first side of the agitation member also resulting in a mixing movement of the milk.

According to an embodiment of the invention, the first side and/or the second side of the agitation member may comprise at least two regions with surfaces forming an angle in relation to each other. The regions may have substantially flat surfaces forming an angle in relation to each other. The different regions push the milk in somewhat different directions resulting in an increased mixing effect of the milk in the milk receiver.

According to an embodiment of the invention, the agitation member is manufactured from a sheet element with a substantially constant thickness. The agitation member may be manufactured from a relatively thin sheet element of, for example, a metal material. Such a sheet element can easily be machined to an agitation member with a first side and a second side with regions of different angles in relation to each other. Alternatively, the agitation member has such a shape that it folds out when moved in one direction and folds together when moved in the other direction. This will also cause the first pressure force to differ from the second pressure force.

According to an embodiment of the invention, the agitation member is mounted to the bottom structure in such a way that when the bottom structure is mounted to the milk receiver, the agitation member will extend up to less than half the maximum milk level in the milk receiver. Thus, it is possible to arrange a relatively small agitation member in the milk receiver. The bottom structure may comprise a control unit configured to receive information about the milk level in the milk receiver, wherein the control unit is configured to activate the agitation member as soon as the milk level in the milk receiver is high enough to cover the agitation member. Since the movement of the agitation member is very gentle for the milk, it is favorable to start the mixing movement of the milk as soon as the milk in the milk receiver covers the agitation member. Such an early activation of the agitation member makes it possible to provide a stirring movement of the milk during a relatively long period of time. The long stirring process of the milk ensures a homogenous distribution of the included substances in the milk before a milk sample is taken.

According to an embodiment of the invention, the actuator is designed to provide a reciprocating linear movement. Such an actuator may have a simple design and be relatively inexpensive. The actuator may e.g. be pneumatically operated, and be activated by compressed air or a vacuum pressure.

According to an embodiment of the invention, the movement transmission mechanism comprises a rod element connected to the agitation member at one end portion and to the actuator at an opposite end portion. Such a movement transmission mechanism including a rod element may have a simple design. The movement transmission mechanism may comprise a flexible membrane which is provided with a through hole for the rod member. In any event, the rod element must extend through an opening in a wall of the bottom structure. An outer periphery of the flexible membrane can be connected to the edges of such an opening in a liquid tight manner. Furthermore, the flexible properties of the membrane makes it possible to provide a liquid tight connection between the rod element and the surfaces defining the through hole of the membrane.

According to an embodiment of the invention, the through hole of the flexible membrane defines a pivot point for the rod member when the actuator acts on the rod element. The through hole provides a substantially fixed position for a part of the rod element located between the end portions. When the actuator provides a movement of the end portion of the rod element on the outside of the milk receiver, the elongated element provides a pivot movement around the pivot point defined by the through hole of the flexible member. As a consequence, the opposite end portion of the rod element in the milk receiver obtains a swinging movement around the pivot point in an opposite direction. Thus, the agitation member connected to the inner end portion of the elongated element provides a corresponding swinging movement around the pivot point. Consequently, the object of the flexible membrane is to provide a liquid-tight sealing and a pivot point for the rod element. Alternatively, it is possible to connect the rod element to a separate pivot mechanism forming a pivot point or pivot axis for the elongated element at the outside of the flexible element. The flexible membrane may be arranged in a wall portion of the bottom structure defining an outlet portion. Thereby, it is easy to arrange the agitation member in a position in which it provides a stirring movement of the milk in the outlet portion.

According to an embodiment of the invention, the bottom structure comprises an outlet portion provided with an outlet valve device. Preferably, the outlet portion forms the lowermost located portion of the inner space of the milk receiver when the bottom structure is mounted to the milk receiver. It is many times difficult to provide a stirring movement of the milk in the whole receiver and especially in an outlet portion located at a lower level than the remaining part of the milk receiver. Since the agitation member is arranged in the vicinity of the outlet portion, it ensures a stirring movement of the milk in the outlet portion and a homogenous mixing of the milk in the whole receiver. The agitation member may comprise a part located in said outlet portion of the milk receiver. In this case, it is possible to achieve a direct stirring movement of the milk in the outlet portion of the milk receiver which further ensures a homogenous mixing of the milk in the whole receiver.

According to an embodiment of the invention, the bottom structure consists of one single element to which is mounted the agitation member, the movement transmission mechanism and the actuator. In this case, it is very easy to mount the agitation device in the milk receiver. Furthermore, such a bottom structure may also comprise a milk sample device extracting a milk sample from the milk in the outlet portion and an outlet valve device controlling the milk flow out of the milk receiver.

### BRIEF DESCRIPTION OF THE DRAWINGS

The present invention is now to be explained more closely by means of a preferred embodiment which is disclosed as an example and with reference to the attached drawings.
- Fig. 1: shows a milk receiver provided with a bottom structure including an agitation device according to the invention,

- Fig. 2: shows a cross section view of the milk receiver in Fig. 1,
- Fig. 3: shows the bottom structure including the agitation device in more detail,
- Fig. 4: shows a cross section view of the bottom structure in Fig. 3,
- Fig. 5: shows an exploded view of the components included in the agitation device and
- Fig. 6: shows a flow chart for taking a milk sample from the milk in the milk receiver.

### BRIEF DESCRIPTION OF A PREFERRED EMBODIMENT OF THE INVENTION

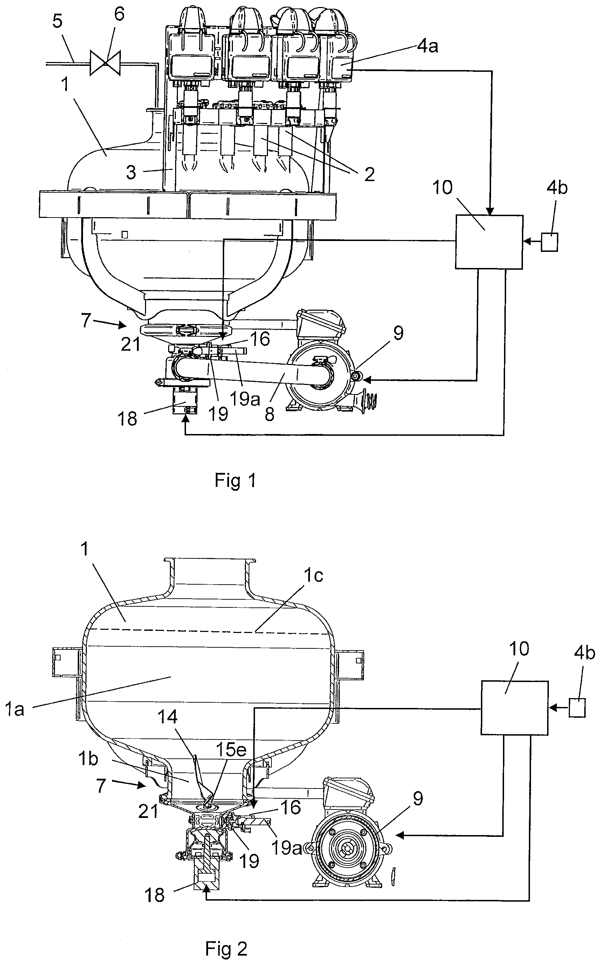

Fig 1 and 2 show a milk receiver 1 for the collection of milk from a milking process. The milk receiver 1 comprises four milk inlet portions 2 for the attachment of a respective end portion of a milk tube (the milk tubes are not shown in Fig. 1). Each inlet portion 2 receives milk, via a milk tube, from a teat cup attached to a cow in a milking stall of a milking parlour. The milk receiver 1 is equipped with an external framework 3 for the support of components such as flow meters 4a measuring the milk flow in the respective milk tubes. A schematically indicated milk level meter 4b is arranged in the milk receiver 1. A vacuum source is connectable to the milk receiver 1 by means of a schematically shown vacuum line 5 and vacuum valve 6. The milk receiver 1 comprises a main portion 1a and a lower portion 1b having a smaller diameter than the main portion 1a. A maximum milk level 1c is indicated in Fig. 2. The inner surface of the milk receiver 1 slopes continuously downwardly allowing an efficient emptying of the milk from the milk receiver 1.

A bottom structure 7 is attached in one piece to the lower portion 1b of the milk receiver 1. The bottom structure is mounted by means of a releasable clamp connection 21 to a bottom portion of the milk receiver 1. The clamp connection 21 comprises a clamping band extending around the periphery of a bottom portion of the milk receiver 1 and an upper portion of the bottom structure 7. A screw mechanism is configured to tighten the band. In this case, the mounting process of the bottom structure 7 may be performed in a fast and simple manner. Furthermore, it is easy to remove the bottom structure 7 from the milk receiver 1 during service or repair work. The bottom structure 7 comprises an agitation device configured to agitate the milk in the milk receiver 1, a milk sample device configured to take a milk sample from the milk in the milk receiver 1, and an outlet valve device configured to control the milk flow out of the milk receiver 1. A milk conduit 8 conveys milk from the milk receiver 1 to a non-shown main milk tank for a plurality of milking stalls in the milking parlour. A milk pump 9 is arranged in the milk conduit 8. A schematically indicated electric control unit 10 controls the emptying of the milk receiver 1 by means of the outlet valve device and the milk pump 9.

When a milking process of a cow is to be performed, a milking robot or an operator attaches the teat cups to the teats of a cow in the milking stall. Milk is sucked from the teat cups, via the milk tubes, to the inlet portions 2 of the milk receiver 1. When the milking process has finished, a milk sample is taken from the milk - the milk sampling process is described in more detail below. When the milk sample has been taken, the control unit 10 sets the outlet valve device in an open position and activates the milk pump 9 such that the milk in the milk receiver 1 flows out from the milk receiver 1 to the milk conduit 8 and the main milk tank.

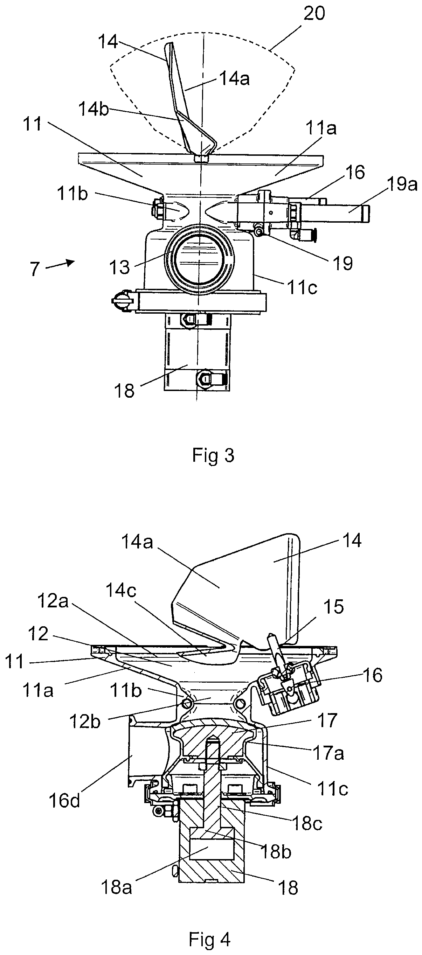

Fig. 3 and 4 show the bottom structure 7 in more detail. The bottom structure 7 comprises a housing 11. The housing 11 forms an outlet portion 12 where the milk is collected before it flows out of the milk receiver 1. The outlet portion 12 is the lowermost located portion of the inner space in the milk receiver 1. The housing 11 comprises a first portion 11a forming an upper part 12a of the outlet portion. The first portion 11a of the housing has downwardly sloping walls such that the upper part 12a of the outlet portion has a continuously decreasing diameter in a downward direction. The housing 11 comprises a second portion 11b forming a lower part 12b of the outlet portion. The lower part 12b has a smaller diameter than the upper part 12a of the outlet portion 12. The housing 11 comprises a third portion 11c including an outlet member 13 to be connected to the milk conduit 8.

The bottom structure 7 comprises an agitation device in the form of an agitation member 14 which is mounted to the bottom structure 7 in such a way that when the bottom structure 7 is mounted to the milk receiver 1, the agitation member 14 will be arranged on the inside of the milk receiver 1, a movement transmission mechanism 15, and a first pneumatic actuator 16 arranged on the outside of the housing 11 in such a way that when the bottom structure 7 is mounted to the milk receiver 1, the pneumatic actuator 16 will be arranged outside of the milk receiver 1. The object of the agitation member 14 is to perform a stirring movement of the milk and provide a substantially homogenous distribution of the substances in the milk receiver 1 before a milk sample is taken. The pneumatic actuator 16 provides a movement which is transferred, via the movement transmission mechanism 15, to the agitation member 14. The movement transmission mechanism 15 extends through a wall portion of the first portion 11a of the housing.

The bottom structure 7 comprises a milk sample device in the form of a milk sample outlet 19 and a sampling cylinder 19a. By means of the milk sample outlet 19, it is possible to extract a milk sample from the lower part 12b of the outlet portion 12. The bottom structure 7 comprises an outlet valve device in the form of an outlet valve 17 movably arranged in the third portion 11c of the housing. The outlet valve 17 is movably arranged by means of a second pneumatic actuator 18. The outlet valve 17 is movably arranged between an upper position in which it closes an outlet opening at a bottom of the outlet portion 12 and a lower position in which it exposes said outlet opening such that the milk flows out of the outlet portion 12 and to the milk conduit 8. The outlet valve 17 is surrounded by an air tight flexible member 17a. The second pneumatic actuator 18 comprises a piston 18b movably arranged in an inner space 18a. The piston 18b is connected to the outlet valve 17 via a piston rod 18c. When compressed air is supplied to the inner space 18a of the actuator 18, the piston 18b and the piston rod 18c obtains a movement displacing the outlet valve 17 to the closed position. When air of ambient pressure is supplied to the inner space 18a, the outlet valve 17 is displaced to the open position.

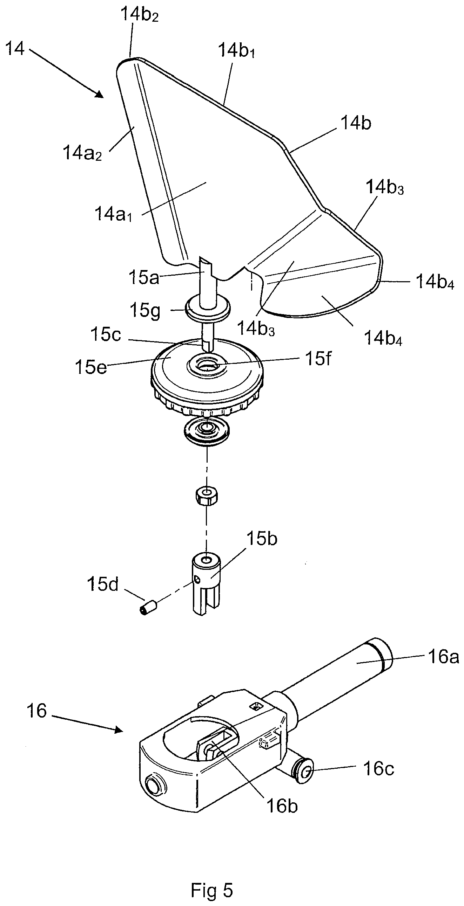

Fig 5 shows the agitation member 14, the transmission mechanism 15 and the first pneumatic actuator 16 in more detail. The agitation member 14 is plate shaped with a substantially constant thickness. The agitation member 14 comprises a first side 14a and a second side 14b. The respective sides 14a, 14b of the agitation member 14 includes a number of regions 14a₁₋₄, 14b₁₋₄. Each region 14a₁₋₄, 14b₁₋₄ has a substantially flat surface forming an angle in relation to a surface of an adjacent region 14a₁₋₄, 14b₁₋₄. The agitation member 14 has a portion 14c to be located in the outlet portion 12. The main part of the agitation member is arranged in the lower portion 1b of the milk receiver. A smaller upper part of the agitation member 14 extends into the main portion 1 a of the milk receiver 1.

The first pneumatic actuator 16 comprises a displaceable piston rod 16a provided with a connection portion 16b. The pneumatic actuator 16 comprises an air inlet portion 16c to be connected to a varying air pressure resulting in a reciprocating rectilinear movement of the piston rod 16a and the connection portion 16b. The movement transmission mechanism 15 comprises a rod element 15a. The rod element 15a is at a lower end portion connected to the connection portion 16b of the actuator 16 via a connecting member 15b. The connecting member 15b is pivotally connected to the connection portion 16b of the actuator 16. Furthermore, the connecting member 15b allows a sliding movement of the rod element 15a in a longitudinal direction in a longitudinal hole of the connecting member 15b. The rod element 15a comprises a flat portion 15c. A pin member 15d is arranged in a transverse hole of the connecting member 15b in contact with the flat portion 15c of the rod element 15a. The pin member 15d prevents turning movements of the rod element 15a in relation to the connecting member 15b and the connection portion 16b of the actuator 16. The rod element 15a is, at an upper opposite end portion, fixedly connected to the agitation member 14.

The rod element 15a extends through an opening in a wall portion of the first portion 11a of the housing. The movement transmission mechanism 15 comprises a flexible membrane 15e to be arranged in said opening. The flexible membrane 15e comprises a through hole 15f for the rod element 15a. The flexible membrane 15e has a design which provides for a liquid tight connection between its periphery and the surfaces defining the opening in the housing 11. Furthermore, the flexible member 15e provides itself or together with a sealing member 15g a liquid tight connection between the rod element 15a and the surfaces defining the through hole 15f. Furthermore, the through hole 15f provides a substantially fixed positioning of an part of the rod element located between the end portions. The through hole 15f defines a pivot point for the rod element 15a.

When the pneumatic actuator 16 performs a reciprocating linear movement, the movement of the lower end portion of the rod element 15a obtains, via the connecting member 15b, a swinging movement around the pivot point. The upper end portion of the rod element 15a provides a corresponding swinging movement in an opposite direction around the pivot point. Consequently, the agitation member 14 provides a corresponding swinging movement around the pivot point. A swinging movement of the agitation member 14 is performed within an area 20 which is indicated with dotted lines in Fig. 3.

A major part of the first side and the second side of the agitation member 14 forms a substantially right angle in relation to the swinging direction of the agitation member 14. As a consequence, the first side acts with a first pressure force on the milk when it performs a swinging movement in a first direction and the second side acts with a second pressure force on the milk when it performs a swinging movement in a second opposite direction. The first pressure force differs from the second pressure force. The first side 14a and the second side 14b provide pushing movements of the milk located in front of them in the swinging directions. The different regions 14a₁₋₄, 14b₁₋₄ of the respective sides 14a, 14b push the milk in somewhat different directions resulting in an increased stirring effect of the milk in the milk receiver. On the "non-pushing" sides, a negative pressure arises which also results in a stirring movement of the milk. Such a swinging movement of the agitation member 14, with a suitable moderate frequency, provides a very effective stirring movement of the milk in the milk receiver 1 at the same time as it is very gentle for the milk. Mechanical treatment of milk such as mixing of the milk increases the content of free fatty acids (FFA) in the milk. The stirring movement of the agitation member 14 according to the above does not significantly increase the content of free fatty acids in milk.

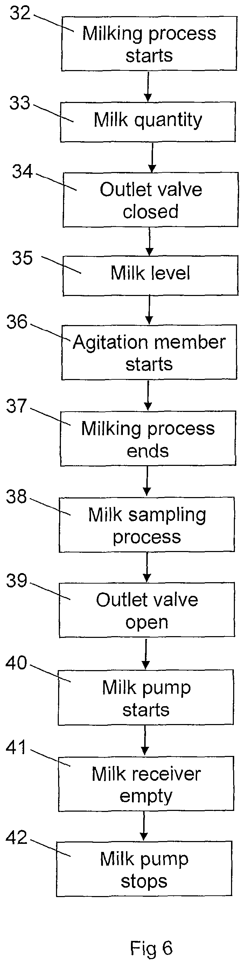

Fig. 6 shows a flow chart for taking a milk sample from the milk in the milk receiver 1. The milking process of an animal starts at 32. The milk flows from the cow via teat cups and milk tubes to the inlet portions 2 of the milk receiver 1. The milk entering the milk receiver 1 is untreated and stratifies into layers. Since the outlet valve device is open, the milk entering the milk receiver 1 flows substantially immediately out of the milk receiver 1, via the outlet portion, to the milk conduit 8. This initial milk flow from the milking process cleans the inner walls of the milk receiver 1 from milk residues from a previous milking process. The initial milk flow is collected in the milk conduit 8 in a position downstream of the milk receiver 1 but upstream of the milk pump 9. The milk pump 9 is not activated, because it is advantageous not to pump small quantities of milk - this is gentler for both the pump and the milk. The control unit 10 receives information from the flow meters 4a about the milk flow to the milk receiver 1. At 33, the control unit 10 estimates the milk quantity supplied to the milk receiver 1. When a predetermined quantity of milk, which may e.g. be 500 ml, has entered the milk receiver 1, the control unit 10 activates, at 34, the second pneumatic actuator 18 such that it moves the outlet valve 17 to the closed position.

At 35, the control unit 10 receives information from the milk level meter 4b, which may e.g. be a float, of the milk level in the milk receiver 1. When the milk level is high enough to cover the agitation member 14, the control unit 10 activates, at 36, the first pneumatic actuator 16 such that it performs a reciprocating swinging movement of the agitation member 14. The reciprocating swinging movement of the agitation member 14 provides a gentle but effective stirring process of the milk in the whole receiver 1. As a consequence, the stirring process results in a homogenous mixture of the different layers and substantially all included substances in the whole receiver 1.

At 37, the milking process ends in the milking stall. The control unit 10 stops the activation of the pneumatic actuator 16 and the swinging movement of the agitation member 14 ceases. A milk sample is now taken of the milk in the milk receiver 1. The milk sample is extracted, via the milk sample outlet 19, from the outlet portion 12 of the milk receiver 1. The milk sample may be directed to a test tube or the like, or directly to an analysis instrument. It is possible to instead take the milk sample during the final part of the milking process, before it has ended. In either case, it is not necessary to stop the swinging movement of the agitation member 14 before the milk sample is taken.

When the milk sample has been taken, the control unit 10 activates the second pneumatic actuator 18, at 39, such that it moves the outlet valve 17 to the open position. The milk flows out from the milk receiver 1 to the milk conduit 8. After a delay of typically a few seconds to allow the air in the milk conduit 8 to bubble up through the milk, the control unit 10 starts, at 40, the milk pump 9 such that the milk in the milk conduit 8 is pumped to a main milk tank where it is mixed with milk from other milking stalls. At 41, the control unit 10 receives information from the milk level meter 4b indicating that the milk receiver is empty. The control unit 10 stops the activation of the milk pump at 42. The outlet valve 17 is maintained in the open position such that any remaining milk residues are able to flow out from the milk receiver 1. The outlet valve 17 is then kept open until the control unit 10 closes it at 34 during the milking process of the next animal.

The invention is not restricted to the described embodiment but may be varied freely within the scope of the claims.

## Claims

1. A bottom structure (7) for a milk receiver (1) to which vacuum from a vacuum supply (5, 6) draws milk from the teats of an animal, the bottom structure (7) comprising an agitation device for stirring of milk in the milk receiver (1), wherein the agitation device comprises an agitation member (14) mounted to the bottom structure (7) in such a way that when the bottom structure (7) is mounted to the milk receiver (1), the agitation member (14) will be arranged on the inside of the milk receiver (1), an actuator (16) mounted to the bottom structure (7) in such a way that when the bottom structure (7) is mounted to the milk receiver (1), the actuator (16) will be arranged outside of the milk receiver (1), and a movement transmission mechanism (15) configured to transfer movements from the actuator (16) to the agitation member (14) in such a way that the actuator (16) and the movement transmission mechanism (15) together provide a reciprocating swinging movement of the agitation member (14) in the milk receiver (1), wherein the agitation member (14) is plate-shaped and comprises a first side (14a) configured to act with a first pressure force on the milk when it performs a swinging movement in a first direction and a second side (14b) configured to act with a second pressure force on the milk when it performs a swinging movement in a second opposite direction, wherein the first pressure force differs from the second pressure force.

2. A bottom structure (7) for a milk receiver (1) according to claim 1, wherein the first side (14a) and the second side (14b) of the agitation member (14) each comprises at least two regions (14a₁₋₄, 14b₁₋₄) with surfaces forming an angle in relation to the surface in an adjacent region (14a₁₋₄, 14b₁₋₄).

3. A bottom structure (7) for a milk receiver (1) according to any one of the preceding claims, wherein the agitation member (14) is manufactured from a sheet element with a substantially constant thickness.

4. A bottom structure (7) for a milk receiver (1) according to any one of the preceding claims, wherein the agitation member (14) is mounted to the bottom structure (7) in such a way that when the bottom structure (7) is mounted to the milk receiver (1), the agitation member (14) will extend up to less than half the maximum milk level (1c) in the milk receiver (1).

5. A bottom structure (7) for a milk receiver (1) according to any one of the preceding claims, wherein the bottom structure (7) comprises a control unit (10) configured to receive information from a milk level meter (4b) about the milk level in the milk receiver (1), wherein the control unit (10) is configured to activate the agitation member (14) as soon as the milk level in the milk receiver (1) is high enough to cover the agitation member (14).

6. A bottom structure (7) for a milk receiver (1) according to any one of the preceding claims, wherein the actuator (16) is designed to provide a reciprocating linear movement.

7. A bottom structure (7) for a milk receiver (1) according to any one of the preceding claims, wherein the actuator (16) is pneumatically operated.

8. A bottom structure (7) for a milk receiver (1) according to any one of the preceding claims, wherein the movement transmission mechanism (15) comprises a rod element (15a) connected to the agitation member (14) at one end portion and to the actuator (16) at an opposite end portion.

9. A bottom structure (7) for a milk receiver (1) according to claim 8, wherein the movement transmission mechanism (15) comprises a flexible membrane (15e) arranged in a wall portion of the bottom structure (7), wherein the flexible membrane (15e) is provided with a through hole (15f) for the rod element (15a).

10. A bottom structure (7) for a milk receiver (1) according to claim 9, wherein the through hole (15f) of the flexible membrane (15e) defines a pivot point for the rod element (15a) when the actuator (16) provides a movement, via the rod element (15a), to the agitation member (14).

11. A bottom structure (7) for a milk receiver (1) according to claim 9 or 10, wherein the flexible membrane (15e) is arranged in a wall portion of the bottom structure (7) defining an outlet portion (12).

12. A bottom structure (7) for a milk receiver (1) according to any one of the preceding claims, wherein an outlet portion (12) provided with an outlet valve (17) for the milk receiver (1) is arranged in the bottom structure (7).

13. A bottom structure (7) for a milk receiver (1) according to claim 12, wherein the agitation member (14) comprises a part (14c) located in said outlet portion (12)).

14. A bottom structure (7) for a milk receiver (1) according to any one of the preceding claims, wherein the bottom structure (7) consists of one single element to which is mounted the agitation member (14), the movement transmission mechanism (15) and the actuator (16).

## Patentansprüche

1. Bodenstruktur (7) für ein Milchaufnahmegefäß (1), zu dem Vakuum aus einer Vakuumversorgung (5, 6) Milch aus den Zitzen eines Tieres zieht, wobei die Bodenstruktur (7) eine Rührvorrichtung zum Durchmischen von Milch in dem Milchaufnahmegefäß (1) umfasst, wobei die Rührvorrichtung ein Rührbauteil (14) umfasst, das an der Bodenstruktur (7) derart gelagert ist, dass, wenn die Bodenstruktur (7) an dem Milchaufnahmegefäß (1) gelagert ist, das Rührbauteil (14) an der Innenseite des Milchaufnahmegefäßes (1) angeordnet ist, wobei ein Stellantrieb (16) an der Bodenstruktur (7) derart gelagert ist, dass, wenn die Bodenstruktur (7) an dem Milchaufnahmegefäß (1) gelagert ist, der Stellantrieb (16) auf der Außenseite des Milchaufnahmegefäßes (1) angeordnet ist, und einen Bewegungsübertragungsmechanismus (15), der konfiguriert ist, um Bewegungen aus dem Stellantrieb (16) auf das Rührbauteil (14) derart zu übertragen, dass der Stellantrieb (16) und der Bewegungsübertragungsmechanismus (15) zusammen eine hin- und hergehende Schwenkbewegung des Rührbauteils (14) in dem Milchaufnahmegefäß (1) bereitstellen, wobei das Rührbauteil (14) plattenförmig ist und eine erste Seite (14a), die konfiguriert ist, um mit einer ersten Druckkraft auf die Milch zu wirken, wenn sie eine Schwenkbewegung in einer ersten Richtung ausführt, und eine zweite Seite (14b), die konfiguriert ist, um mit einer zweiten Druckkraft auf die Milch zu wirken, wenn sie eine Schwenkbewegung in einer zweiten entgegengesetzten Richtung ausführt, umfasst, wobei sich die erste Druckkraft von der zweiten Druckkraft unterscheidet.

2. Bodenstruktur (7) für ein Milchaufnahmegefäß (1) nach Anspruch 1, wobei die erste Seite (14a) und die zweite Seite (14b) des Rührbauteils (14) jeweils wenigstens zwei Bereiche (14a₁₋₄, 14b₁₋₄) mit Oberflächen, die einen Winkel in Bezug auf die Oberfläche in einem benachbarten Bereich (14a₁₋₄, 14b₁₋₄) ausbilden, umfassen.

3. Bodenstruktur (7) für ein Milchaufnahmegefäß (1) nach einem der vorhergehenden Ansprüche, wobei das Rührbauteil (14) aus einem Blechelement mit einer im Wesentlichen konstanten Dicke hergestellt ist.

4. Bodenstruktur (7) für ein Milchaufnahmegefäß (1) nach einem der vorhergehenden Ansprüche, wobei das Rührbauteil (14) derart an der Bodenstruktur (7) gelagert ist, dass, wenn die Bodenstruktur (7) an dem Milchaufnahmegefäß (1) gelagert ist, sich das Rührbauteil (14) bis zu weniger als die Hälfte des maximalen Milchpegels (1c) in dem Milchaufnahmegefäß (1) erstreckt.

5. Bodenstruktur (7) für ein Milchaufnahmegefäß (1) nach einem der vorhergehenden Ansprüche, wobei die Bodenstruktur (7) eine Steuereinheit (10) umfasst, die konfiguriert ist, um Informationen aus einem Milchpegelmesser (4b) über den Milchpegel in dem Milchaufnahmegefäß (1) zu empfangen, wobei die Steuereinheit (10) konfiguriert ist, um das Rührbauteil (14) zu aktivieren, sobald der Milchpegel in dem Milchaufnahmegefäß (1) hoch genug ist, um das Rührbauteil (14) abzudecken.

6. Bodenstruktur (7) für ein Milchaufnahmegefäß (1) nach einem der vorhergehenden Ansprüche, wobei der Stellantrieb (16) ausgelegt ist, um eine hin- und hergehende lineare Bewegung bereitzustellen.

7. Bodenstruktur (7) für ein Milchaufnahmegefäß (1) nach einem der vorhergehenden Ansprüche, wobei der Stellantrieb (16) pneumatisch betätigt wird.

8. Bodenstruktur (7) für ein Milchaufnahmegefäß (1) nach einem der vorhergehenden Ansprüche, wobei der Bewegungsübertragungsmechanismus (15) ein Stabelement (15a) umfasst, das mit dem Rührbauteil (14) an einem Endabschnitt und mit dem Stellantrieb (16) an einem entgegengesetzten Endabschnitt verbunden ist.

9. Bodenstruktur (7) für ein Milchaufnahmegefäß (1) nach Anspruch 8, wobei der Bewegungsübertragungsmechanismus (15) eine flexible Membran (15e) umfasst, die in einem Wandabschnitt der Bodenstruktur (7) angeordnet ist, wobei die flexible Membran (15e) mit einem Durchgangsloch (15f) für das Stabelement (15a) versehen ist.

10. Bodenstruktur (7) für ein Milchaufnahmegefäß (1) nach Anspruch 9, wobei das Durchgangsloch (15f) der flexiblen Membran (15e) einen Drehpunkt für das Stabelement (15a) definiert, wenn der Stellantrieb (16) eine Bewegung über das Stabelement (15a) zu dem Rührbauteil (14) bereitstellt.

11. Bodenstruktur (7) für ein Milchaufnahmegefäß (1) nach Anspruch 9 oder 10, wobei die flexible Membran (15e) in einem Wandabschnitt der Bodenstruktur (7) einen Auslassabschnitt (12) definierend angeordnet ist.

12. Bodenstruktur (7) für ein Milchaufnahmegefäß (1) nach einem der vorhergehenden Ansprüche, wobei ein Auslassabschnitt (12), der mit einem Auslassventil (17) für das Milchaufnahmegefäß (1) versehen ist, in der Bodenstruktur (7) angeordnet ist.

13. Bodenstruktur (7) für ein Milchaufnahmegefäß (1) nach Anspruch 12, wobei das Rührbauteil (14) einen Teil (14c) umfasst, der in dem Auslassabschnitt (12) gelegen ist.

14. Bodenstruktur (7) für ein Milchaufnahmegefäß (1) nach einem der vorhergehenden Ansprüche, wobei die untere Struktur (7) aus einem einzigen Element besteht, an dem das Rührbauteil (14), der Bewegungsübertragungsmechanismus (15) und der Stellantrieb (16) gelagert sind.

## Revendications

1. Structure de fond (7) pour un récepteur de lait (1) à laquelle le vide à partir d'un approvisionnement de vide (5, 6) tire du lait des trayons d'un animal, la structure de fond (7) comprenant un dispositif d'agitation pour le brassage de lait dans le récepteur de lait (1), dans laquelle le dispositif d'agitation comprend un élément d'agitation (14) monté sur la structure de fond (7) de telle sorte que lorsque la structure de fond (7) est montée sur le récepteur de lait (1), l'élément d'agitation (14) sera disposé à l'intérieur du récepteur de lait (1), un actionneur (16) monté sur la structure de fond (7) de telle sorte que lorsque la structure de fond (7) est montée sur le récepteur de lait (1), l'actionneur (16) sera disposé à l'extérieur du récepteur de lait (1), et un mécanisme de transmission de mouvement (15) conçu pour transférer les mouvements de l'actionneur (16) à l'élément d'agitation (14) de telle sorte que l'actionneur (16) et le mécanisme de transmission de mouvement (15) fournissent ensemble un mouvement oscillant alternatif de l'élément d'agitation (14) dans le récepteur de lait (1), dans laquelle l'élément d'agitation (14) est en forme de plaque et comprend un premier côté (14a) conçu pour agir avec une première force de pression sur le lait lorsqu'il effectue un mouvement oscillant dans une première direction et un second côté (14b) conçu pour agir avec une seconde force de pression sur le lait lorsqu'il effectue un mouvement oscillant dans une seconde direction opposée, dans laquelle la première force de pression diffère de la seconde force de pression.

2. Structure de fond (7) pour un récepteur de lait (1) selon la revendication 1, dans laquelle le premier côté (14a) et le second côté (14b) de l'élément d'agitation (14) comprennent chacun au moins deux régions (14a₁₋₄, 14b₁₋₄) dotées de surfaces formant un angle par rapport à la surface dans une région adjacente (14a₁₋₄, 14b₁₋₄).

3. Structure de fond (7) pour un récepteur de lait (1) selon l'une quelconque des revendications précédentes, dans laquelle l'élément d'agitation (14) est fabriqué à partir d'un élément en feuille avec une épaisseur sensiblement constante.

4. Structure de fond (7) pour un récepteur de lait (1) selon l'une quelconque des revendications précédentes, dans laquelle l'élément d'agitation (14) est monté sur la structure de fond (7) de telle sorte que lorsque la structure de fond (7) est montée sur le récepteur de lait (1), l'élément d'agitation (14) s'étendra jusqu'à moins de la moitié du niveau de lait maximum (1c) dans le récepteur de lait (1).

5. Structure de fond (7) pour un récepteur de lait (1) selon l'une quelconque des revendications précédentes, dans laquelle la structure de fond (7) comprend une unité de commande (10) configurée pour recevoir des informations à partir d'un indicateur de niveau de lait (4b) concernant le niveau de lait dans le récepteur de lait (1), dans laquelle l'unité de commande (10) est configurée pour activer l'élément d'agitation (14) dès que le niveau de lait dans le récepteur de lait (1) est suffisamment élevé pour couvrir l'élément d'agitation (14).

6. Structure de fond (7) pour un récepteur de lait (1) selon l'une quelconque des revendications précédentes, dans laquelle l'actionneur (16) est conçu pour fournir un mouvement linéaire alternatif.

7. Structure de fond (7) pour un récepteur de lait (1) selon l'une quelconque des revendications précédentes, dans laquelle l'actionneur (16) est actionné de manière pneumatique.

8. Structure de fond (7) pour un récepteur de lait (1) selon l'une quelconque des revendications précédentes, dans laquelle le mécanisme de transmission de mouvement (15) comprend un élément de tige (15a) relié à l'élément d'agitation (14) à une partie d'extrémité et à l'actionneur (16) à une partie d'extrémité opposée.

9. Structure de fond (7) pour un récepteur de lait (1) selon la revendication 8, dans laquelle le mécanisme de transmission de mouvement (15) comprend une membrane flexible (15e) disposée dans une partie de paroi de la structure de fond (7), dans laquelle la membrane flexible (15e) est pourvue d'un trou traversant (15f) pour l'élément de tige (15a).

10. Structure de fond (7) pour un récepteur de lait (1) selon la revendication 9, dans laquelle le trou traversant (15f) de la membrane flexible (15e) définit un point de pivot pour l'élément de tige (15a) lorsque l'actionneur (16) fournit un mouvement, par le biais de l'élément de tige (15a), à l'élément d'agitation (14).

11. Structure de fond (7) pour un récepteur de lait (1) selon la revendication 9 ou 10, dans laquelle la membrane flexible (15e) est disposée dans une partie de paroi de la structure de fond (7) définissant une partie de sortie (12).

12. Structure de fond (7) pour un récepteur de lait (1) selon l'une quelconque des revendications précédentes, dans laquelle une partie de sortie (12) pourvue d'une soupape de sortie (17) pour le récepteur de lait (1) est disposée dans la structure de fond (7).

13. Structure ide fond (7) pour un récepteur de lait (1) selon la revendication 12, dans laquelle l'élément d'agitation (14) comprend une partie (14c) située dans ladite partie de sortie (12)).

14. Structure de fond (7) pour un récepteur de lait (1) selon l'une quelconque des revendications précédentes, dans laquelle la structure de fond (7) est constituée d'un seul élément sur lequel est monté l'élément d'agitation (14), le mécanisme de transmission de mouvement (15) et l'actionneur (16).
